# EUROPEAN PATENT SPECIFICATION

(11) **EP 0 916 576 B1**
(45) Date of publication and mention of the grant of the patent: **12.03.2003**
(21) Application number: 99200491.1
(22) Date of filing: 29.07.1994
(51) Int. Cl.: B64G 1/28, G01C 19/30

(54) **High torque double gimbal control moment gyro**
Doppelkardanisches Momentumregelungsgyroskop mit hohem Drehmoment
Gyroscope à contrôle de moment à double cardan à couple élève

(43) Date of publication of application: 19.05.1999
(62) Divisional of application: 94305636.6
(73) Proprietor: Hughes Electronics Corporation, El Segundo, California 90245-0956 (US)
(72) Inventor: Rosen, Harold A., Santa Monica, California 90402 (US)
(74) Representative: Jackson, Richard Eric

(56) References cited:
- US-A- 2 046 735
- US-A- 3 471 105
- US-A- 3 795 150
- US-A- 4 686 771
- PATENT ABSTRACTS OF JAPAN vol. 17, no. 423 (M-1458), 6 August 1993 (1993-08-06) & JP 05 087183 A (MITSUBISHI HEAVY IND. LTD.), 6 April 1993 (1993-04-06)

## Description

### Field of the Invention

The present invention relates to double gimbal control moment gyroscopes used in spacecraft for attitude stabilization. More particularly, the present invention relates to a method for re-pointing a spacecraft in which braking means added to both gimbals are actuated simultaneously with the application of torque to the gimbals to achieve amplification of the control moment imparted to the spacecraft.

### Background Art

A system for rapidly positioning gimbaled objects is known from US-A-3795150.

Control moment gyroscopes have been in use for many years in both single gimbal and double gimbal versions to control the attitude of spacecraft. The single gimbal control moment gyroscope is advantageous over the double gimbal control moment gyroscope in that the useful output torque applied to the spacecraft by the single gimbal control moment gyroscope can be orders of magnitude greater than the torque applied by the torque motor. The high output torque capability of the single gimbal control moment gyroscope results from the fact that the torque applied from the torque motor in the single gimbal control moment gyroscope design need overcome only the static inertia of the spin wheel to cause the gyroscope to precess.

In contrast to the single gimbal control moment gyroscope, a conventional double gimbal control moment gyroscope provides no torque magnification over that supplied by the torque motor. The conventional double gimbal control moment gyroscope disadvantageously requires impracticality large torque motors to provide high torque control. Thus, a desirable feature of the single gimbal control moment gyroscope design over that of the conventional double gimbal control moment gyroscope is that small torque motors can be used to create large control torques. However, the single gimbal control moment gyroscope system disadvantageously requires two separate devices to provide high torque control along two axes while the conventional double gimbal control moment gyroscope design requires only a single large torque motor. Accordingly, the current design approach to meet high torque control requirements in gyroscope systems uses a multiplicity of single gimbal control moment gyroscopes. Thus, an approach is sought which combines the high torque capabilities of the single gimbal control moment gyroscope with the dual-axis control of the double gimbal control moment gyroscope.

### SUMMARY OF THE INVENTION

With the foregoing in mind, the present invention provides a method of repointing a platform having first and second double gimbal control moment gyroscopes, wherein each of said gyroscopes includes first and second interconnected gimbals respectively rotatable about first and second orthogonal axes, comprising the steps of:
(A) applying a first control torque to the first gimbal of the first gyroscope about the first axis of the first gyroscope; and
(B) applying a first braking force to the second gimbal of the first gyroscope about the second axis of the first gyroscope, step (B) being performed while carrying out step (A), the application of said first braking force to the second gimbal of said first gyroscope reacting against the inertia of the first gimbal of the first gyroscope to thereby enhance the effect of said control torque; and
(C) simultaneously applying a second control torque to the second gimbal of the second gyroscope about the second axis of the second gyroscope and applying a second braking force to the first gimbal of the second gyroscope about the first axis of the second gyroscope, the application of said second braking force to the first gimbal of the second gyroscope reacting against the inertia of the second gimbal of the second gyroscope to thereby enhance the effect of said second control torque.

### BRIEF DESCRIPTION OF THE DRAWINGS

Figure 1 is a perspective view of a high torque control moment gyroscope.
Figure 2 is a perspective view of the X axis gimbal brake Bₓ shown in Figure 1.

### DETAILED DESCRIPTION OF THE PREFERRED EMBODIMENTS

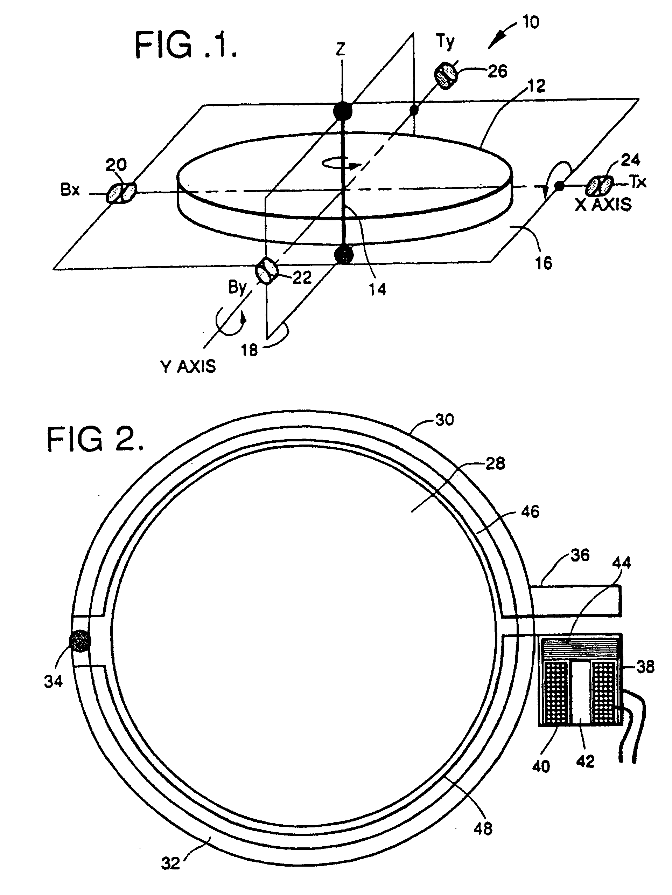

Referring now to the drawings wherein like reference numerals are used to identify identical components in various views, Figure 1 depicts a double gimbal control moment gyroscope system generally indicated by the numeral 10 which includes a spinning rotor, referred to as a spin wheel 12, which spins about spin axis Z. Once the spin wheel 12 is set in motion, the inertia of the spinning wheel 12 tends to resist any attempt to change its direction of rotation regardless of how the support of the spin wheel 12 moves about, a property which makes the gyroscope system 10 useful in guiding satellites and space vehicles.

The central shaft 14 of the spin wheel 12 is mounted on an x gimbal 16 which rotates about the x coordinate axis. The x gimbal 16, in turn, is mounted on a y gimbal 18 which rotates about the y coordinate axis. As shown in Figure 1, both the x gimbal 16 and the y gimbal 18 are perpendicular to each other and to the spin axis Z which is aligned in the direction of the z coordinate axis. This standard configuration of x and y gimbals 16 and 18, respectively, takes advantage of a property of gyroscopes called precession. Precession is the tendency of a spinning body to move at right angles to the direction of any force that attempts to change its direction of rotation.

An electromagnetically operated gimbal brake Bₓ 20 is added to the x gimbal 16 to provide a means for braking or impeding the rotation of the x gimbal 16 about the x axis. In a similar manner, an electromagnetically operated gimbal brake B_{y} 22 is provided on the y gimbal 18 and acts as a means for braking or impeding the rotation of the y gimbal 18 about the y axis. X torque motor 24 provided on the x gimbal 16 acts as a means for applying a torque to the x gimbal 16. In a similar manner, Y torque motor 26 provided on the y gimbal 18 acts as a means for applying a torque to the y gimbal. X and Y torque motors 24 and 26 are the standard control moment devices provided as part of any double gimbal control moment gyroscope system 10.

A high torque or amplified control moment about either the x or y axis can be created by simultaneously exciting or actuating both the X or Y torque motor 24 or 26, respectively, and the orthogonal X or Y gimbal brake Bₓ 20 or B_{y} 22, respectively. For example, application of a torque Tₓ to the x gimbal 16 by exciting the X torque motor 24 while at the same time actuating or locking Y gimbal brake B_{y} 22 results in the creation of an amplified control moment transmitted to the x gimbal 16 through the locked gimbal brake B_{y} 22 causing x gimbal 16 to rotate about the x axis. Thus, in this example, instead of allowing the y gimbal 18 to precess freely about the y axis as would be the case if a torque Tₓ were applied to the x gimbal 16 of a standard gyroscope, simultaneous actuation of an the X torque motor 24 and y gimbal brake B_{y} 22 imparts a high torque through Y gimbal brake B_{y} 22 to the spacecraft. A control moment about the y axis is similarly created by simultaneously exciting the Y torque motor T_{y} 26 and the X gimbal brake Bₓ 20. Thus, two large orthogonal torques can be produced through the use of two small torque motors and a single gyro.

Any small nutational motion created by control transients which still exist after the high torque double gimbal control moment gyroscope system 10 has reached its new pointing direction may be damped using the normal low torque mode of the gyroscope system 10, i.e., X or Y torque motor 24 or 26, respectively, is actuated while both X and Y brakes Bₓ 20 and B_{y} 22, respectively, remain unlocked.

In a single gyroscope system 10, amplified control moments or torques such as those produced by the double gimbal control moment gyroscope system 10 used in the method of the present invention are available sequentially but not simultaneously. This outcome results from the fact that only one brake, Bₓ 20 or B_{y} 22, can be actuated at a time. Sequential actuation of the electromagnetically actuated brakes Bₓ 20 and B_{y} 22 can increase the time required to re-point the gyroscope system 10 by 41% as compared to a conventional double gimbal control moment gyroscope system in which simultaneous application of torque to both gimbals is possible. However, in the event that a second gyroscope system 10 is provided for redundancy, the x axis of the first gyroscope system and the y axis of. the second gyroscope system may be controlled simultaneously to recover the 41% increase in re-pointing time. In such a redundant gyroscope system configuration, sequential actuation of the X and Y brakes Bₓ 20 and B_{y} 22, respectively, as outlined above provides a backup mode in the event of that one the redundant gyroscope systems 10 fails.

Figure 2 depicts X gimbal brake Bₓ 20, embodied representatively as an electromagnetic gimbal brake. X gimbal shaft 28 is surrounded by upper and lower brake shoes 30 and 32 which are hinged together at spring 34. Attached to upper brake shoe 30 is dipole piece 36. Attached to lower brake shoe 32 is electromagnet 38 which comprises a coil 40 surrounding a core 42 and a non-magnetic coil plate 44. When electric current flows through the coil 40, an magnetic field is created pulling dipole piece 36 toward the coil plate 44, thereby clamping brake shoes 30 and 32 around X gimbal shaft 28. Brake shoes 30 and 32 contact X gimbal shaft 28 along upper and lower friction surfaces 46 and 48, respectively. The Y gimbal brake B_{y} 22 can be provided in the same manner as the X gimbal brake Bₓ 20 just described.

It will of course be understood that the present invention has been described above purely by way of example, and that modifications of detail can be made within the scope of the invention as defined by the claims.

## Claims

1. A method of repointing a platform having first and second double gimbal control moment gyroscopes, wherein each of said gyroscopes includes first and second interconnected gimbals (16,18) respectively rotatable about first and second orthogonal axes, comprising the steps of:
(A) applying a first control torque to the first gimbal (16) of the first gyroscope about the first axis of the first gyroscope; and
(B) applying a first braking force to the second gimbal (18) of the first gyroscope about the second axis of the first gyroscope, step (B) being performed while carrying out step (A), the application of said first braking force to the second gimbal of said first gyroscope reacting against the inertia of the first gimbal of the first gyroscope to thereby enhance the effect of said control torque; and
(C) simultaneously applying a second control torque to the second gimbal (18) of the second gyroscope about the second axis of the second gyroscope and applying a second braking force to the first gimbal (16) of the second gyroscope about the first axis of the second gyroscope, the application of said second braking force to the first gimbal of the second gyroscope reacting against the inertia of the second gimbal of the second gyroscope to thereby enhance the effect of said second control torque.

2. A method according to claim 1, wherein step (B) is performed by:
energizing an electromagnetic braking means (38), and
frictionally engaging said second gimbal (18) using said electromagnetic braking means (38).

3. A method according to claim 2, wherein said engaging is performed by clamping a portion of said second gimbal (18) between a pair of brakeshoes (30,32) forming a part of said braking means (38).

## Patentansprüche

1. Verfahren zum Wiederausrichten einer Plattform, welche erste und zweite doppelkardanische Momentensteuerungs- bzw. -regelungskreisel bzw. -gyroskope aufweist, worin jedes der Gyroskope erste und zweite miteinander verbundene Kardanringe bzw. kardanische Aufhängungen (16, 18) beinhaltet, welche respektiv um erste und zweite orthogonale Achsen rotierbar sind, umfassend die Schritte:
(A) Anlegen eines ersten Steuerungs- bzw. Regelungsdrehmoments an die erste kardanische Aufhängung (16) des ersten Gyroskops um die erste Achse des ersten Gyroskops; und
(B) Anlegen einer ersten Bremskraft an die zweite kardanische Aufhängung (18) des erste Gyroskops um die zweite Achse des ersten Gyroskops, wobei der Schritt (B) verrichtet wird, während der Schritt (A) ausgeführt wird, wobei das Anlegen der ersten Bremskraft an die zweite kardanische Aufhängung des ersten Gyroskops gegen die Trägheit der ersten kardanischen Aufhängung des ersten Gyroskops wirkt, um dadurch den Effekt des Steuer- bzw. Regeldrehmoments zu verstärken; und
(C) gleichzeitig Anlegen eines zweiten Steuer- bzw. Regeldrehmoments an die zweite kardanische Aufhängung (18) des zweiten Gyroskops um die zweite Achse des zweiten Gyroskops und Anlegen einer zweiten Bremskraft an die erste kardanische Aufhängung (16) des zweiten Gyroskops um die erste Achse des zweiten Gyroskops, wobei das Anlegen der zweiten Bremskraft an die erste kardanische Aufhängung des zweiten Gyroskops gegen die Trägheit der zweiten kardanischen Aufhängung des zweiten Gyroskops wirkt, um dadurch den Effekt des zweiten Steuer- bzw. Regeldrehmoments zu verstärken.

2. Verfahren nach Anspruch 1, worin der Schritt (B) verrichtet wird durch:
Einschalten bzw. Erregen eines elektromagnetischen Bremsmittels (38), und reibschlüssiges in Eingriff bringen der zweiten kardanischen Aufhängung (18) durch Nutzen des elektromagnetischen Bremsmittels (38).

3. Verfahren nach Anspruch 2, worin das in Eingriff bringen durch Klemmen eines Teils bzw. Abschnitts der zweiten kardanischen Aufhängung (18) zwischen einem paar Bremsbacken (30, 32) verrichtet wird, welche einen Teil des Bremsmittels (38) ausbilden.

## Revendications

1. Procédé pour réorienter une plate-forme munie d'un premier et d'un second gyroscope à contrôle de moment par double cardan, dans laquelle chacun desdits gyroscopes contient un premier et un second cardan (16, 18) reliés ensemble, pouvant tourner respectivement autour d'un premier et d'un second axe orthogonaux, comprenant les étapes suivantes :
(A) appliquer un premier couple de commande au premier cardan (16) du premier gyroscope autour du premier axe du premier gyroscope ;
(B) appliquer une première force de freinage au second cardan (18) du premier gyroscope, autour du second axe du premier gyroscope, l'étape (B) étant réalisée alors que s'effectue l'étape (A), l'application de ladite première force de freinage au second cardan dudit premier gyroscope venant en réaction contre l'inertie du premier cardan du premier gyroscope pour, ainsi, augmenter l'effet dudit couple de commande ; et
(C) simultanément, appliquer un second couple de commande au second cardan (18) du second gyroscope autour du second axe du second gyroscope et appliquer une seconde force de freinage sur le premier cardan (16) du second gyroscope autour du premier axe du second gyroscope, l'application de ladite seconde force de freinage au premier cardan du second gyroscope venant en réaction contre l'inertie du second cardan du second gyroscope pour, ainsi, augmenter l'effet dudit second couple de commande.

2. Procédé selon la revendication 1, dans lequel l'étape (B) est réalisée par :
actionnement de moyens (38) de freinage électromagnétique et
engagement par friction dudit second cardan (18) par utilisation desdits moyens (38) de freinage électromagnétique.

3. Procédé selon la revendication 2, dans lequel ledit engagement est réalisé en serrant une partie dudit second cardan (18) entre une paire de mâchoires de frein (30, 32) formant une partie desdits moyens (38) de freinage.
